Europäisches Patentamt

European Patent Office

Office européen des brevets

(19)

(11) **EP 0 776 752 B1**

(12) **EUROPÄISCHE PATENTSCHRIFT**

| | |
|---|---|
| (45) Veröffentlichungstag und Bekanntmachung des Hinweises auf die Patenterteilung:<br>**21.08.2002 Patentblatt 2002/34** | (51) Int Cl.7: **B29C 49/78**, B29C 47/92 |

(21) Anmeldenummer: **96119136.8**

(22) Anmeldetag: **29.11.1996**

(54) **Verfahren zum Blasformen von Hohlkörpern aus thermoplastischem Kunststoff**

Method of blow moulding and hollow thermoplastic articles

Procédé de moulage par soufflage de corps creux en matière thermoplastique

(84) Benannte Vertragsstaaten:
**AT BE DE ES FR GB IT NL**

(30) Priorität: **30.11.1995 DE 19544634**

(43) Veröffentlichungstag der Anmeldung:
**04.06.1997 Patentblatt 1997/23**

(73) Patentinhaber: **Feuerherm, Harald**
**D-53840 Troisdorf (DE)**

(72) Erfinder:
- **Feuerherm, Harald, Dipl.-Ing. Maschinenbau**
  **53840 Troisdorf (DE)**
- **Deckwerth, Horst**
  **53840 Troisdorf (DE)**

- **Kappen-Feuerherm, Rolf, Dipl.-Ing.**
  **Maschinenbau**
  **53840 Troisdorf (DE)**

(74) Vertreter: **Albrecht, Rainer Harald, Dr.-Ing. et al**
**Patentanwälte**
**Andrejewski, Honke & Sozien,**
**Postfach 10 02 54**
**45002 Essen (DE)**

(56) Entgegenhaltungen:
**EP-A- 0 058 297       EP-A- 0 345 474**
**WO-A-84/02874        US-A- 3 865 528**
**US-A- 4 159 293**

- **PATENT ABSTRACTS OF JAPAN vol. 95, no. 004**
  **& JP 07 088945 A (UBE IND LTD), 4.April 1995,**

EP 0 776 752 B1

**Beschreibung**

Die Erfindung betrifft ein Verfahren zum Blasformen von Hohlkörpern aus thermoplastischem Kunststoff, bei dem

schlauchförmige Vorformlinge aus Kunststoffschmelze hergestellt werden,

die Vorformlinge in einer Blasform zu Hohlkörpern aufgeweitet werden und

die Hohlkörper ausgeformt sowie anhaftende Abfallbutzen entfernt werden,

wobei die Kunststoffschmelze aus einem Düsenspalt eines Strangpreßkopfes austritt, der von einem mit der Vorformlingsbildung ablaufenden Wanddickenprogramm gesteuert wird, welches das Volumen der für einen Vorformling benötigten Kunststoffschmelze in eine vorgegebene Anzahl (n) Volumenabschnitte unterteilt und diesen Volumenabschnitten Düsenspaltstellwerte zuordnet, wobei die Düsenspaltstellwerte eine über die Anzahl (n) Volumenabschnitte aufgetragene Programmkurve bilden und wobei die Vorformlingsextrusion bzw. der Vorformlingsausstoß geregelt wird sowie im Rahmen dieser Regelung mindestens ein Anteil des Düsenspaltes als Stellgröße verwendet wird. Vorzugsweise wird als Stellgröße ein Grundspalt verändert, der sich gleichmäßig über die n Volumenabschnitte bzw. die Länge der Vorformlinge erstreckt.

Zum Herstellen von Hohlkörpern aus thermoplastischem Kunststoff, beispielsweise Kanistern, werden in der Praxis- im wesentlichen zwei Arten von Maschinen eingesetzt. Die eine arbeitet im kontinuierlichen Betrieb, d. h. der Vorformling wird kontinuierlich extrudiert. Die andere Ausführung arbeitet im Speicherkopfbetrieb. Mittels eines Massekolbens wird die in dem Speicherraum enthaltene Kunststoffschmelze zu jeweils einem hohlstrangförmigen Vorformling ausgestoßen. Das Ausstoßen erfolgt taktweise.

Das in den Düsenspalt steuernde Wanddickenprogramm weist Bereiche mit kleinen Düsenspaltstellwerten und mindestens einen Bereich auf, dem wesentlich größere Düsenspaltstellwerte zugeordnet sind. Bei der Herstellung von geschlossenen Behältern, z. B. Kanistern, sind zumeist zwei Bereiche mit stark erhöhten Düsenspaltstellwerten vorgesehen. Die Programmkurve durchläuft in diesen Bereichen jeweils ein Funktionsmaximum. Der dem Funktionsmaximum zugeordnete Vorformlingsabschnitt unterliegt in der Blasform einer starken Reckung. Je extremer die Programmkurve in einzelnen Bereichen eingestellt ist, um so genauer muß das zu diesen Punkten gehörende Material, welches der größten Reckung unterworfen ist, auch an der richtigen Stelle in der Blasform positioniert werden. Abweichungen von mehr als $\pm$ 1 % bezogen auf die Höhe der Blasform führen zu erheblichen Qualitätseinbußen in Form eines Hohlkörperverzugs, geringeren Stauchwerten und geringeren Festigkeitseigenschaften des fertigen Hohlkörpers. Es versteht sich, daß ferner das Gewicht des Hohlkörpers einem vorgegebenen Sollgewicht möglichst exakt entsprechen soll.

Da die Extrusionsparameter, beispielsweise die Förderleistung des an den Strangpreßkopf angeschlossenen Schneckenextruders, die rheologischen Eigenschaften der Kunststoffschmelze, die Materialtemperatur und dergleichen Schwankungen unterliegen, ist eine Regelung des Düsenspaltes und bei Anlagen mit einem kontinuierlich betriebenen Extruder auch der Schneckendrehzahl erforderlich. Zahlreiche unterschiedliche Regelungsverfahren sind bekannt und können bei dem eingangs beschriebenen Extrusionsblasverfahren eingesetzt werden.

Bei einem aus EP-A-0 345 474 bekannten Verfahren werden an den Hohlkörpern zwei unterschiedliche Gewichtsmessungen durchgeführt und werden nach Maßgabe der Gewichtsmeßwerte die Schenkeldrehzahl und/oder im Speicherbetrieb der Düsenspalt des Strangpreßkopfes gesteuert. Vorzugsweise werden das untere Butzengewicht der Hohlkörper im Anschluß an die Entfernung aus der Blasform sowie das Nettogewicht der Hohlkörper, nach vorangegangener Entfernung der Abfallbutzen, gemessen und diese Meßwerte für das Regelungsverfahren verwendet. Anhand von zwei Gewichtsmeßwerten kann einerseits die Position eines vorgegebenen Vorformlingabschnittes relativ zur Blasform mit großer Genauigkeit eingestellt und gleichzeitig auch das vorgegebene Gewicht des Hohlkörpers eingehalten werden.

Bei einem aus EP-A 0 058 297 bekannten Verfahren wird dem Wanddickenprogramm ein Zusatzprogramm aufgeschaltet, dessen Wirkung auf einen Längenabschnitt der Programmkurve beschränkt ist, in dem die Programmkurve ein Funktionsmaximum durchläuft. Das Zusatzprogramm unterteilt diesen Längenabschnitt ebenfalls in eine Mehrzahl (n) Inkremente und ordnet den kürzeren Intervallschritten Funktionswerte zu. Dadurch wird eine höhere Programmauflösung in Bereichen erzielt, in denen die Programmkurve ein Funktionsmaximum durchläuft. Das ermöglicht präzisere Stellbewegungen des Düsenspaltes in kritischen Bereichen des Vorformlings, die in der Blasform einer großen Reckung unterliegen.

Der aus dem Düsenspalt austretende Vorformling ist frei formbar inneren und äußeren Kräften ausgesetzt. Aufgrund des viskoelastischen Verhaltens der Kunststoffschmelze kann sich die Materialverteilung im Vorformling ändern, beispielsweise durch Schwankungen der Schmelzetemperatur, des Kunststoffmaterials, der Extrusionszeit, auf die Schmelze wirkenden Scherbeanspruchungen und dergleichen. Ungenauigkeiten ergeben sich aus dem Wechselspiel der als Schwellen, Schrumpfen und Auslängen bezeichneten viskoelastischen Verformungen. Mit Schwellen bezeichnet man den Effekt, daß der Durchmesser und die Wandstärke des aus dem Strangpreßkopf austretenden Vorformlings sich infolge einer Desorientierung der im Fließkanal ausgerichteten Moleküle ändern. Unter Schrumpfen versteht man den Effekt, daß sich der Vorformling nach Verlassen des Strangpreßkopfes abkühlt und während der Abkühlung ein Zusammenziehen der desorientierten Moleküle erfolgt. Auslängung tritt infolge des Eigengewichtes des Vorformlings auf. Unter dem mit der Extrusion zunehmenden Gewicht des Vorformlings verringern sich Durchmesser und Wandstärke des Vorformlings unterhalb des Kopfaustritts. Die Auslängung wird von der Vorformlingsunterkante beginnend mit zunehmender Anzahl n der aus dem Strangpreßkopf austretenden Volumenabschnitte größer. Die am Strangpreßkopf beobachtete Austrittsgeschwindigkeit des Vorformlings nimmt zu. Die beschriebenen viskoelastischen Effekte stehen in einer komplexen Wechselwirkung. Mit längerer Extrusionszeit und höherer Massetemperatur wird die Auslängung größer. Wird die Auslängung größer, so nimmt die Schwellung am Kopfaustritt ab. Andererseits nimmt die Schwellung zu bei einer Reduzierung des Düsenspaltes und bei einer Vergrößerung der Drehzahl des Schneckenextruders. Bei längerer Extrusionszeit wird schließlich die Schrumpfung im unteren Bereich des Vorformlings mit größerem Abstand vom Düsenspalt größer. Im folgenden werden die beschriebenen viskoelastischen Effekte des Schwellens, Auslängens und Schrumpfens zusammenfassend auch als "Durchhängung" bezeichnet.

Die Gestaltung der Programmkurve berücksichtigt das viskoelastische Verhalten der Kunststoffschmelze für einen durch eine bestimmte Temperatur, Massedurchsatz, Material, Düsenspalt, Schneckendrehzahl und ggf. weiterer Betriebsparameter festgelegten Betriebspunkt und trägt der Durchhängung im Betriebspunkt Rechnung. Weichen die Betriebsparameter von denen der Auslegung zugrundegelegten Werten ab, so hat dies Einfluß auf die Materialverteilung im Vorformling mit der Folge, daß beispielsweise der Abstand zwischen zwei Vorformlingsabschnitten, die jeweils einem Funktionsmaximum der Programmkurve zugeordnet sind, sich gegenüber dem der Auslegung zugrundegelegten Abstand ändert. Änderungen der Materialverteilung im Vorformling können durch die bekannten Regelungsverfahren nur unvollkommen ausgeglichen werden. Auch dann, wenn der extrudierte oder ausgestoßene Vorformling das gewünschte Gewicht und in bezug auf einen Vorformlingsabschnitt die richtige Lage in der Blasform einnimmt, können die beschriebenen viskoelastischen Effekte dazu führen, daß sich der Abstand des betreffenden Vorformlingsabschnittes zu einem anderen Bezugspunkt innerhalb des Vorformlings ändert. Es stört insbesondere, wenn sich der Abstand zwischen zwei Vorformlingsabschnitten, die jeweils einem Funktionsmaximum der Programmkurve zugeordnet sind und beim Aufweiten der Vorformlinge zu Hohlkörpern kritische Querschnitte darstellen, ändert. Schon geringfügige Änderungen dieses Abstandes können erhebliche Qualitätseinbußen in bezug auf die Stauchwerte, Verzugs- und Festigkeitseigenschaften des daraus gefertigten Hohlkörpers zur Folge haben.

In der prioritätsälteren, nachveröffentlichten Patentanmeldung EP 0 685 315 A2 wird vorgeschlagen der Programmkurve Korrekturwerte aufzuschalten, die das Durchhängen des Vorformlings beeinflussen, wenn die Materialverteilung im Hohlkörper unbefriedigend ist. Die Korrekturwerte können zu den Funktionswerten des ablaufenden Wanddickenprogramms automatisch addiert oder subtrahiert werden. Nachteilig ist, daß sich bei einer Aufschaltung von Korrekturwerten die für die Vorformlingsbildung eingesetzte Schmelzemenge ändert. Die Änderung der Schmelzemenge muß durch nachgeschaltete Regelkreise, die z. B. auf die Schneckendrehzahl Einfluß nehmen, wieder korrigiert werden.

Der Erfindung liegt die Aufgabe zugrunde, bei dem eingangs beschriebenen Verfahren eine zusätzliche Regelung vorzusehen, mit der es möglich ist, bei Vorformlingen, deren Länge und Gewicht vorgegebenen Sollwerten entsprechen, eine störende Änderung der Materialverteilung, die durch das viskoelastische Verhalten der Kunststoffschmelze bedingt ist, möglichst schnell auszugleichen.

Gegenstand der Erfindung und Lösung dieser Aufgabe ist ein Verfahren nach Anspruch 1. Bei dem erfindungsgemäßen Verfahren wird anhand mindestens einer Meßgröße die Materialverteilung im Vorformling oder im Hohlkörper mit einer Vorgabe verglichen und wird zum Zwecke des Ausregelns einer Abweichung von der Vorgabe den Düsenspaltstellwerten der Programmkurve Korrekturwerte aufgeschaltet, die das Durchhängen des Vorformlings beeinflussen. Vorzugsweise wird der Grundspalt oder ein anderer Teil der Programmkurve bei einer Aufschaltung der Korrekturwerte so angepaßt, daß die für die Vorformlingsbildung eingesetzte Schmelzemenge konstant bleibt. Die Korrekturwerte können positive und negative Werte besitzten. Durch die sofortige Anpassung im Wanddickenprogramm können unerwünschte Störungen bei der Vorformlingsextrusion bzw. bei dem Vorformlingsausstoß vermieden werden.

Die Aufschaltung der Korrekturwerte kann nach verschiedenen Verfahren erfolgen. Eine Ausführungsform sieht vor, daß die Programmkurve sich durch Superposition des Grundspaltes, der Profilkurve und eines Korrekturbandes ergibt, dessen Funktionswerte eine nichtlineare Funktion bilden, wobei die Korrekturwerte für eine Regelabweichung der Materialverteilung dadurch festgelegt werden, daß die den Volumenabschnitten zugeordneten Funktionswerten des Korrekturbandes durch Multiplikation mit einem Profilfaktor gestreckt oder gestaucht werden.

Der Profilfaktor ist beispielsweise anhand einiger Versuche als Funktion der die Materialverteilung betreffenden Regelabweichung festlegbar. Das Korrekturband bildet vorzugsweise eine Rampe, die an dem der Vorformlingsunterkante zugeordneten Volumenabschnitt n=1 beginnend durch einen stetigen, überproportional ansteigenden Kurvenzug über die Anzahl (n) Volumenabschnitte beschrieben ist. Die rampenförmige Ausbildung des Korrekturbandes berücksichtigt, daß die später aus dem Düsenspalt austretenden Volumenabschnitte des Vorformlings aufgrund des mit wachsender Vorformlingslänge zunehmenden Gewichtes größeren Zugkräften ausgesetzt sind und einer stärkeren Auslängung unterliegen. Aufgrund der komplexen Wechselwirkung zwischen Auslängung und Gewicht des aus dem Düsenspalt ausgetretenen Teils des Vorformlings ist die Abhängigkeit nicht linear. Vorzugsweise wird mit einer exponentiell ansteigenden Rampe gearbeitet.

In weiterer Ausgestaltung lehrt die Erfindung, daß das Korrekturband eine Rampe bildet mit einem Profil, das im wesentlichen spiegelbildlich zu der Profilkurve ist. Diese Ausführung beruht auf der Erkenntnis, daß große Wandstärken des Vorformlings einer geringeren Auslängung unterworfen sind als Bereiche mit einer dünnen Wandstärke. Das Korrekturband besitzt folglich dort, wo die Profilkurve ein Funktionsmaximum durchläuft, ein korrespondierendes Funktionsminimum. Bereiche der Profilkurve, die einer kleinen Wandstärke des Vorformlings zugeordnet sind, korrespondieren mit Kurvenabschnitten des Korrekturbandes mit großen Funktionswerten. Wird das Profil des Korrekturbandes mit einem Profilfaktor multipliziert, so resultieren kleine Korrekturwerte für Bereiche der Programmkurve, die ein Funktionsmaximum durchlaufen, und größere Korrekturwerte in Bereichen der Programmkurve, die einer kleinen Wandstärke des Vorformlings zugeordnet sind. Das Korrekturband kann einen Bruchteil der reziproken Programmkurve oder Profilkurve plus einer Rampe darstellen. Wenn das Auslängen und ggf. das Schwellen und Schrumpfen durch empirische oder halbempirische Funktionen in Abhängigkeit der Materialdaten und Maschinendaten beschrieben sind, werden diese Funktionen zweckmäßig zur Festlegung des Korrekturbandes verwendet.

Eine weitere Ausführung des erfindungsgemäßen Verfahrens sieht vor, daß die Funktionswerte der Programmkurve oder die Funktionswerte einer Profilkurve, die um den Anteil eines Grundspaltes kleiner ist als die Programmkurve, mit einem Profilfaktor multipliziert werden, wobei der Profilfaktor als Funktion der Regelabweichung festgelegt ist. Schließlich kann mit der Vorformlingsbildung ein Korrekturprogramm synchron zu dem Wanddickenprogramm ablaufen, welches der Programmkurve des Wanddickenprogramms Korrekturwerte zuordnet. Die Korrekturwerte können auf der Grundlage theoretischer Modelle, die das Schrumpfen, Schwellen und Auslängen in Abhängigkeit der Materialdaten und Prozeßparameter beschreiben, in Verbindung mit Versuchen festgelegt werden. Die Festlegung der Korrekturwerte erfolgt vorzugsweise so, daß zumindest die Vorformlingsabschnitte, die den Funktionsmaxima der Programmkurve zugeordnet sind, mit engen Toleranzen vorgegebene Positionen bzw. Abstände zueinander einhalten und die Dicke der Vorformlingsabschnitte an diesen Stellen stets erhalten bleibt.

Werden der Programmkurve positive und/oder negative Korrekturwerte aufgeschaltet, so hat dies Einfluß auf die pro Zeiteinheit ausgestoßene oder extrudierte Schmelzemenge. Die Änderung des Schmelzemassenstromes kann im Rahmen der vorhandenen Regelung der Vorformlingsextrusions bzw. des Vorformlingsausstoßes in demselben oder einem nachfolgenden Arbeitstakt ausgeregelt werden.

Im Rahmen der Erfindung liegt es, die Änderung des Grundspaltes und/oder eines anderen Teils der Programmkurve auf einen Abschnitt des Vorformlings zu beschränken oder abschnittsweise nach unterschiedlichen Kriterien durchzuführen. Vorzugsweise würde der Zeitpunkt der Änderung von dem ablaufenden Wanddickenprogramm bestimmt.

Die Messung der Materialverteilung im Vorformling kann auf verschiedene Weise erfolgen. Im Rahmen der Erfindung kann mit Meßgrößen gearbeitet werden, die lediglich Aufschluß über die Materialverteilung in einem Querschnitt des Vorformlings oder über die mittlere Materialverteilung in einem Vorformlingsabschnitt geben. Dazu gehören Gewichtsmessungen an einem oder mehreren Hohlkörperabschnitten, wobei die Abweichung mindestens einer Gewichtsmessung von einem vorgegebenen Sollwert für die Festlegung der Korrekturwerte verwendet wird. Eine weitere Möglichkeit zur Messung der Materialverteilung im Vorformling besteht darin, daß an den aus dem Düsenspalt austretenden Vorformlingen mindestens eine Markierung angebracht wird, deren Position an dem vollständig extrudierten bzw. ausgestoßenen Vorformling oder an dem Hohlkörper mit einer Soll-Position verglichen wird. Man kann auch mit mehreren Markierungen arbeiten und den Abstand zwischen den Markierungen an dem vollständig extrudierten Vorformling oder dem Hohlkörper erfassen. Schließlich besteht die Möglichkeit, an den Hohlkörpern und/oder den Vorformlingen Wanddickenmessungen durchzuführen und nach Maßgabe dieser Messungen die Korrekturwerte festzulegen. Weitergehende und genauere Aufschlüsse über die Materialverteilung im Vorformling sind möglich, wenn mit einer Meßeinrichtung gearbeitet wird, die mehrere in Extrusionsrichtung bzw. Ausstoßrichtung untereinander angeordnete Signalgeber aufweist. Es kann auch mit einem Signalgeber gearbeitet werden, der in Vorformlingsrichtung verfahren wird. Schließlich kann eine Kamera eingesetzt werden, die Geschwindigkeitsaufnahmen während der Vorformlingsbildung macht. Durch einen Extrusionszeitvergleich der von den Signalgebern oder der Kamera gemessenen Extrusionszeiten können die Korrekturwerte zur Beeinflussung des Durchhängens ermittelt werden. Vorzugweise erfolgt das dadurch, daß die Abweichungen der Extrusionszeiten von vorgegebenen Sollwerten ermittelt werden, daß die Sollwertabweichungen untereinander verglichen werden und eine Korrektur der Programmkurve vorgenommen wird, wenn die Sollwertabweichungen untereinander differieren. Es versteht sich, daß die beschriebenen Meßverfahren auch in beliebigen Kombinationen eingesetzt werden können.

Das erfindungsgemäße Verfahren ergänzt die Regelung bei der Vorformlingsextrusion bzw. dem Vorformlingsausstoß, welche auf die Einhaltung vorgegebener Gewichtswerte und/oder einer vorgegebenen Position des Vorformlings relativ zur Blasform gerichtet sind. Üblicherweise hat die Lageregelung des Vorformlings relativ zur Blasform Vorrang. Die Lageregelung gleicht Schwankungen in bezug auf die Förderleistung und viskoelastischer Einflüsse aus, die durch einen Wechsel der Chargen, der Materialgemische, Zugabe von Farbstoffen und ähnlichen Materialen bedingt sind. Die Lageregelung ist vorzugsweise so ausgelegt, daß der einem Funktionsmaximum der Programmkurve zugeordnete Abschnitt des Vorformlings zum Schließzeitpunkt der Blasform innerhalb enger Toleranzen eine vorgegebene Position in der Blasform einnimmt. Der einem Funktionsmaximum zugeordnete Vorformlingsabschnitt beschreibt einen kritischen Querschnitt des Vorformlings, der beim Aufweiten des Vorformlings in der Blasform einer starken Reckung unterliegt.

Die erfindungsgemäße Regelung in bezug auf die Materialverteilung setzt ein, wenn anhand der Meßwerte erkennbar ist, daß die Abweichungen von einem Sollwert auf die unter Durchhängung subsumierbaren viskoelastischen Effekte zurückzuführen sind. Vorzugsweise setzt die erfindungsgemäße Regelung in bezug auf die Materialverteilung ein, wenn die Vorformlinge die gewünschte Position relativ zur Blasform einnehmen und dennoch die Materialverteilung im Vorformling unbefriedigend ist. Es versteht sich, daß die verschiedenen Regelungsvorgänge für die Lagekorrektur des Vorformlings in der Blasform, ggf. für eine Korrektur des Hohlkörpergewichts, sowie das Ausregeln einer von der Vorgabe abweichenden Materialverteilung, die auf das Durchhängen des Vorformlings zurückzuführen ist, zeitgleich ausgeführt werden können, wenn eine ausreichende Zahl von Meßgrößen ermittelt werden und durch die Meßgrößen die Stellgrößen quantitativ oder zumindest in bezug auf ihren Trend eindeutig festliegen.

Gemäß einer bevorzugten Ausführung der Erfindung werden an den Hohlkörpern jeweils drei Gewichtsabschnitte gemessen, insbesondere das Gewicht des unteren Abfallbutzens, das Nettogewicht des Hohlkörpers und das Gewicht des oberen Abfallbutzens. Anstelle des Gewichts des oberen Abfallbutzens könnte auch das Bruttogewicht des Hohlkörpers (in der Regel die Summe aus dem unteren Abfallbutzen, dem Nettogewicht und dem oberen Abfallbutzen) verwendet werden. Werden zwei Hohlkörper in einem Takt übereinander hergestellt, so könnte auch der in Austrittsrichtung obere Hohlkörper anstatt des oberen Abfallbutzens zur Regelung verwendet werden. Durch zwei Gewichtsmeßwerte sind die Stellgrößen für eine etwaige Lagekorrektur sowie eine etwaige Gewichtskorrektur festgelegt. Das Regelungsverfahren ist in EP-A-0 345 474 beschrieben. Der dritte Gewichtsmeßwert wird verwendet für die Festlegung der Korrekturwerte zur Beeinflussung der Materialverteilung. Durch die beschriebenen drei Gewichtsmeßwerte liegen erforderliche Korrekturen quantitativ oder zumindest im Trend fest, so daß Fehler in Bezug auf die Lage des Vorformlings, in bezug auf das Hohlkörpergewicht sowie die Materialverteilung im Vorformling in einem Zuge ausgeregelt werden können.

Im folgenden wird die Erfindung anhand einer lediglich ein Ausführungsbeispiel darstellenden Zeichnung ausführlicher erläutert. Es zeigen in schematischer Darstellung

Fig. 1         ein Anlagenschema zum Blasformen von Hohlkörpern aus thermoplastischem Kunststoff,

Fig. 2         die Darstellung einer hälftigen Kontur eines Kanisters mit einer dazugehörenden Programmkurve,

Fig. 3         die Verstellung des Düsenspaltes gemäß einer weiteren Programmkurve,

Fig. 4 und 5   die Änderung einer Programmkurve durch Aufschaltung von Korrekturwerten,

Fig. 6         die Abhängigkeit des Profilfaktors von einem für die Materialverteilung des Vorformlings charakteristischen Meßwert, nicht maßstäblich.

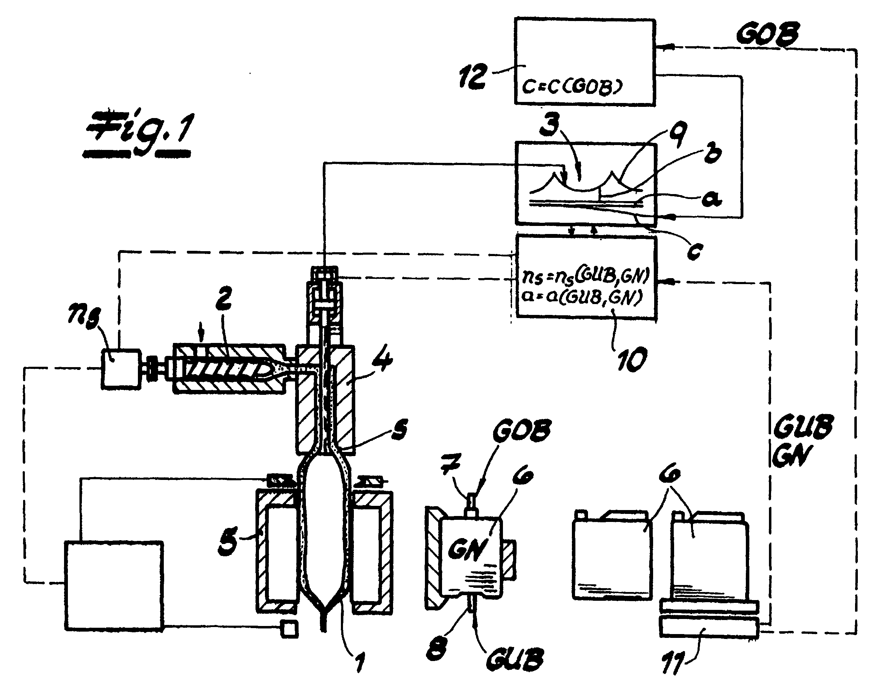

Dem in Fig. 1 dargestellten Anlagenschema entnimmt man, daß schlauchförmige Vorformlinge 1 mittels eines Schneckenextruders 2 aus dem nach Maßgabe eines Wanddickenprogramms 3 gesteuerten Düsenspalts eines Strangpreßkopfes 4 extrudiert werden. In darauf folgenden Arbeitstakten werden die extrudierten Vorformlinge 1 in einer Blasform 5 zu Hohlkörpern 6 aufgeweitet, die Hohlkörper 6 ausgeformt und anhaftende Abfallbutzen 7, 8 entfernt. Funktionsprüfungen, beispielsweise Wägungen und Dichtigkeitsprüfungen, können daran anschließen.

Die Vorformlingsextrusion wird nach einem an sich bekannten Verfahren so geregelt, daß der Vorformling 1 in der Blasform 5 zum Schließzeitpunkt der Blasform eine vorgegebene Position einnimmt, sowie der aus dem Vorformling 1 gefertigte Hohlkörper 6 ein vorgegebenes Nettogewicht aufweist. Bei Ist/Sollwert-Abweichungen werden der Düsenspalt s und ggf. außerdem die Schneckendrehzahl $n_s$ mittels einer nur schematisch angedeuteten Steuereinrichtung 10 verändert. Im Ausführungsbeispiel werden zwei Gewichtsabschnitte, beispielsweise das Nettogewicht GN und das Gewicht GUB des unteren Abfallbutzens, auf einer Waage 11 gemessen. Weichen die Gewichtsmeßwerte von Sollwerten ab, so werden die Schneckendrehzahl

$n_s$ des Extruders 2 und/oder der Düsenspalt s zum Zwecke des Ist/Sollwert-Ausgleiches von der Steuereinrichtung 10 verstellt. Das Regelungsschema ist in EP-A-0 354 474 beschrieben.

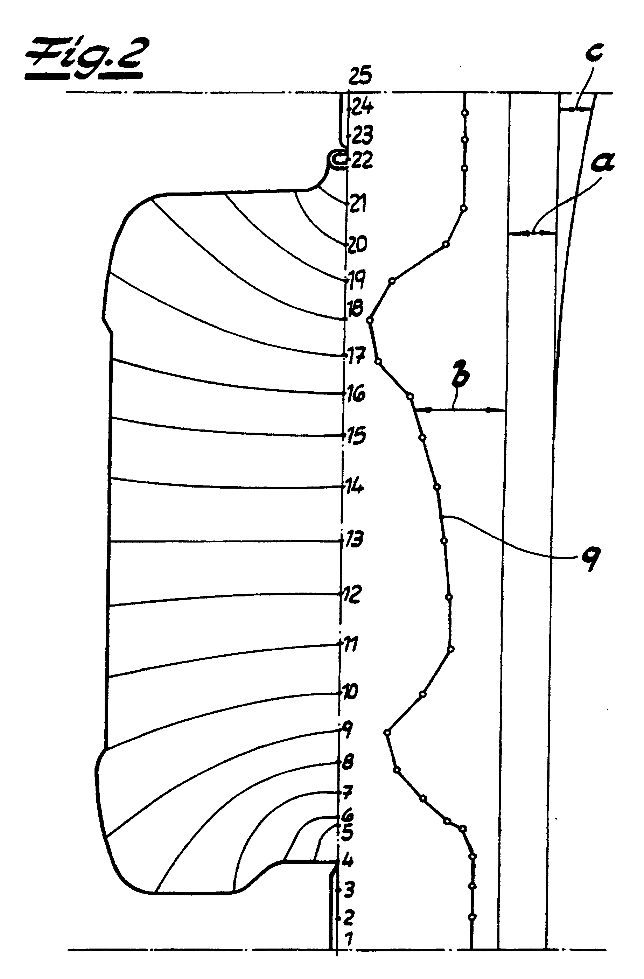

Die Fig. 2 zeigt die Verstellung des Düsenspaltes s bei ablaufendem Wanddickenprogramm in Abhängigkeit der Vorformlingslänge. Das Wanddickenprogramm 3 unterteilt das Volumen der für einen Vorformling 1 benötigten Kunststoffschmelze in eine vorgegebene Anzahl n Volumenabschnitte und ordnet diesen Volumenabschnitten Düsenspaltstellwerte s zu. Die Düsenspaltstellwerte s bilden eine über die Anzahl n Volumenabschnitte aufgetragene Programmkurve 9, die sich zumindest aus einem gleichmäßigen Grundspalt a und einer Profilkurve b zusammensetzt. Die Programmkurve 9 weist auf schmale Bereiche beschränkte, ausgeprägte Funktionsmaxima auf, die Vorformlingsbereichen zugeordnet sind, die in der Blasform 5 stark gereckt werden. Dies sind insbesondere die Eckbereiche eines Kanisters.

Im Ausführungsbeispiel wird zu jedem Hohlkörper 6 das Gewicht eines dritten Gewichtsabschnittes, vorzugsweise das Gewicht GOB des oberen Abfallbutzens, ermittelt und mit einem Sollgewicht $GOB_{Soll}$ verglichen. Das Gewicht GOB des oberen Abfallbutzens ist eine Meßgröße für eine Durchhängung des Vorformlings 1. Unter Durchhängung versteht man die Summe einer Mehrzahl viskoelastischer Effekte, vornehmlich Schwellung, Schrumpfung und Auslängung infolge des Vorformlingeigengewichtes und der Materialeigenschaften. Weicht das Gewicht GOB des oberen Abfallbutzens von dem Sollwert $GOB_{Soll}$ ab, so ist dies ein Hinweis darauf, daß die Materialverteilung im Vorformling 1 nicht mit der Vorgabe übereinstimmt.

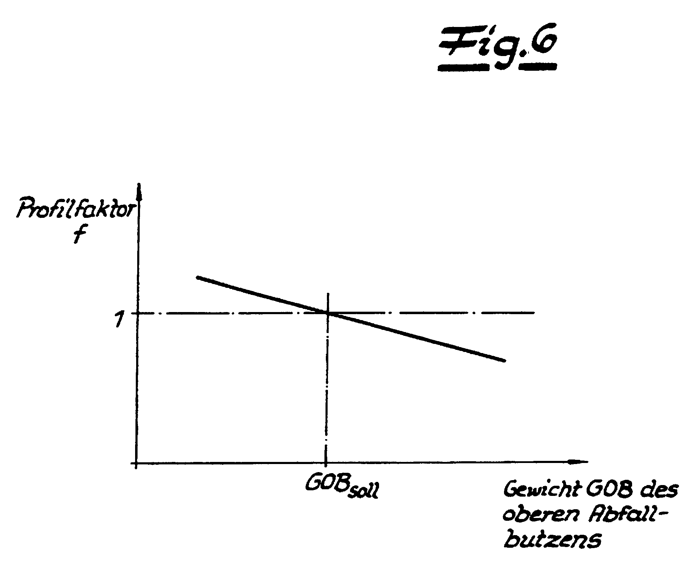

Die Abweichung der Materialverteilung im Vorformling 1 von der Vorgabe wird ausgeglichen, indem den Düsenspaltstellwerten s der Programmkurve 9 Korrekturwerte aufgeschaltet werden, die das Durchhängen des Vorformlings 1 beeinflussen. Den Figuren 1 und 2 entnimmt man, daß die Programmkurve 9 sich durch Superposition des Grundspaltes a, der Profilkurve b und eines Korrekturbandes c ergibt, dessen Funktionswerte eine nichtlineare Funktion bilden. Die Korrekturwerte d für eine Regelabweichung der Materialverteilung werden dadurch festgelegt, daß die den Volumenabschnitten n zugeordneten Funktionswerte des Korrekturbandes c durch Multiplikation mit einem Profilfaktor f gestreckt,oder gestaucht werden. Der Profilfaktor f ist als Funktion der Differenzgewichte zwischen dem Sollgewicht $GOB_{Soll}$ des oberen Abfallbutzens und dem Gewichts-Istwert GOB festgelegt, wie dies z. B. die Fig. 6 andeutet. In Fig. 1 ist angedeutet, daß der Meßwert GOB einer Regeleinrichtung 12 zugeführt wird, die den Meßwert GOB mit dem Sollwert $GOB_{soll}$ vergleicht und im Falle einer Ist/Soll-Wert-Abweichung das Korrekturband c verändert oder auf eine andere, im folgenden noch näher beschriebene Weise der Programmkurve Korrekturwerte aufschaltet, die das Durchhängen des Vorformlings beeinflussen. Es versteht sich, daß der Profilfaktor auch als Funktion einer anderen, die Materialverteilung betreffenden Regelabweichung festgelegt werden kann. Mit den Gewichtsmeßwerten, insbesondere den Gewichten des oberen Abfallbutzens GOB, des Hohlkörpers GN und des unteren Abfallbutzens GUB, können Regelabweichungen bezüglich der Lage der Vorformlinge 1 in der Blasform 5, des Netto-Hohlkörpergewichtes GN und der Materialverteilung in den Vorformlingen 1 in einem Zug ausgeregelt werden.

Das Korrekturband c bildet eine Rampe, die an dem der Vorformlingsunterkante n=1 zugeordneten Volumenabschnitt beginnend durch einen stetigen, überproportional ansteigenden Kurvenzug über die Anzahl n Volumenabschnitte beschrieben ist. Im Ausführungsbeispiel steigt die Rampe c exponentiell an. Wird die Rampe mit einem Profilfaktor f multipliziert, so ergeben sich Korrekturwerte d,

$$d = c \cdot (f-1),$$

die im unteren Bereich des Vorformlings 1 klein sind und überproportional zum oberen Ende des Vorformlings 1 zunehmen.

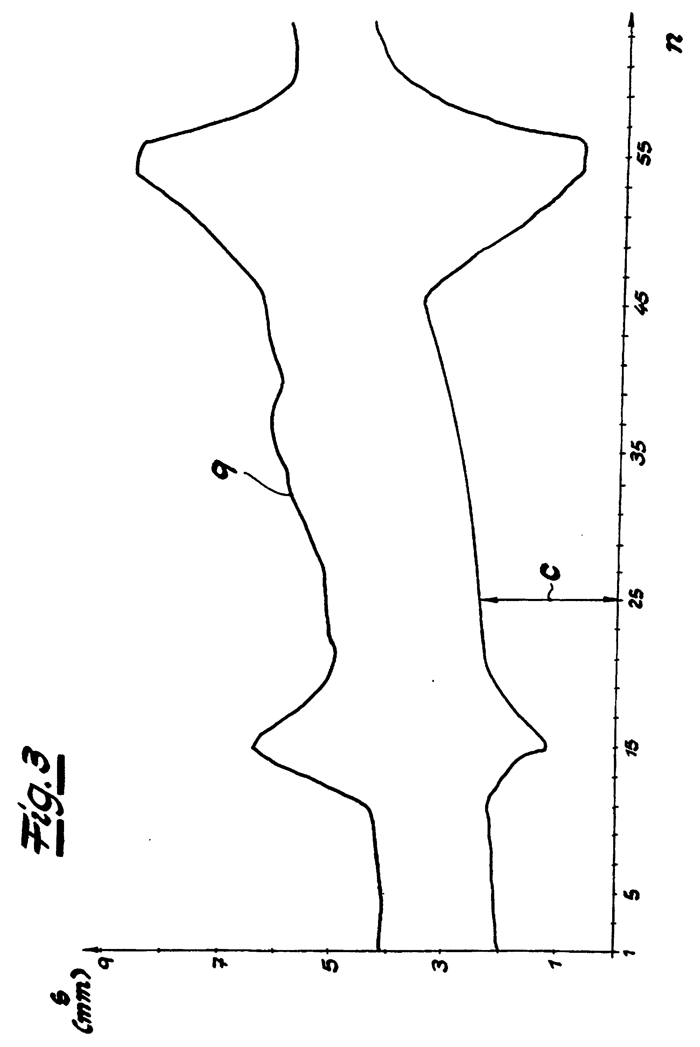

Die Fig. 3 zeigt die Verstellung des Düsenspaltes s gemäß einer weiteren Programmkurve 9, die von der Vorformlingsunterkante n=1 beginnend zur Vorformlingsoberseite hin ansteigt und zwei Funktionsmaxima aufweist. Das in das Diagramm ebenfalls eingezeichnete Korrekturband c bildet eine Rampe, die im wesentlichen parallel zu der Programmkurve 9 verläuft und ein Profil besitzt, das im wesentlichen spiegelbildlich zu der Programmkurve ist. In den Bereichen, in denen die Programmkurve 9 Funktionsmaxima aufweist, durchläuft das Profil des Korrekturbandes c ein Minimum. Muß eine Abweichung der Materialverteilung von der Vorgabe ausgeregelt werden, so wird das Korrekturband c mit einem Profilfaktor f multipliziert, dessen Wert abhängig ist von der die Materialverteilung des Vorformlings kennzeichnenden Meßgröße bzw. deren Abweichung (auch Regelabweichung genannt), von einem vorgegebenen Sollwert. Fig. 6 veranschaulicht dies schematisch an einem Beispiel. Die Korrekturwerte d, die sich durch Multiplikation des Profilfaktors mit den Funktionswerten des Korrekturbandes

$$d = c \cdot (f-1)$$

im Kurvenminimum ergeben, sind kleiner als die Korrekturwerte der übrigen Bereiche. Im Ergebnis werden der Programmkurve daher im Bereich ihrer Funktionsmaxima kleinere Korrekturwerte aufgeschaltet als in den übrigen Bereichen. Dies beruht auf der Erkenntnis, daß dickwandige Bereiche des Vorformlings 1 einer geringeren Auslängung unterliegen als dünnwandige Bereiche des Vorformlings.

Werden den Düsenspaltwerten s der Programmkurve 9 Korrekturwerte d aufgeschaltet, die das Durchhängen des Vorformlings 1 beeinflussen, so wird gleichzeitig der Grundspalt und/oder ein anderer Anteil der Programmkurve so angepaßt, daß die für die Vorformlingsbildung eingesetzte Schmelzemenge konstant bleibt. Da durch die Erfassung von z. B. drei Gewichtsabschnitten eine eindeutige Aussage über Menge, Lage und Durchhängung vorliegt, können sich Kompensationsänderungen ggf. aufheben.

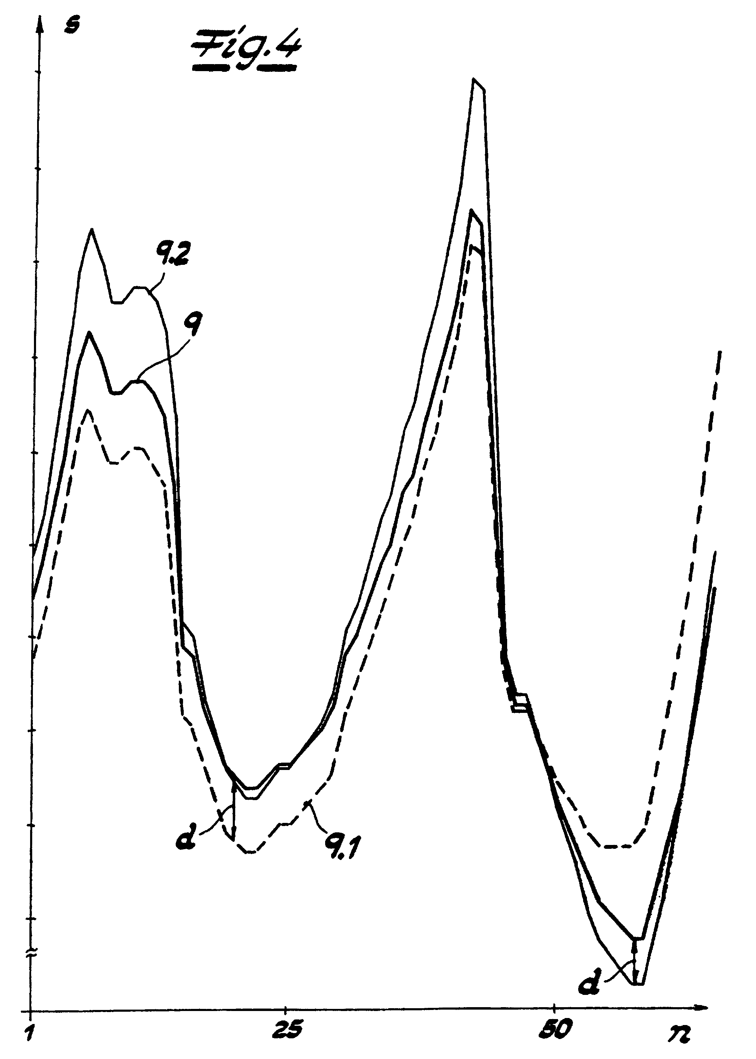

Die Fig. 4 zeigt anhand verschiedener Beispiele die Änderung der Programmkurve 9 durch Aufschaltung von Korrekturwerten d, um Abweichungen der Materialverteilung im Vorformling 1 von einer Vorgabe auszugleichen. Die Programmkurve 9 besitzt zwei ausgeprägte Maxima, denen dickwandige Vorformlingsabschnitte zugeordnet sind. Weicht die Materialverteilung im Vorformling von der Vorgabe ab, obwohl der Vorformling 1 das richtige Gewicht besitzt und die richtige Position in der Blasform 5 einnimmt, so werden der Programmkurve 9 Korrekturwerte d aufgeschaltet, die das Durchhängen des Vorformlings beeinflussen. Die Kurven 9.1 und 9.2 zeigen Beispiele entsprechend korrigierter Programmkurven. Welche Korrekturwerte am sinnvollsten eingesetzt werden, ist hohlkörper-, maschinen- und materialabhängig.

Der Korrektur, die zur Programmkurve 9.1 führt, liegt ein Korrekturband c in Form einer Rampe zugrunde, die an dem der Vorformlingsunterkante n=1 zugeordneten Volumenabschnitt beginnend durch einen stetigen, überproportional ansteigenden Kurvenzug über die n Volumenabschnitte beschrieben ist. Die Rampe steigt exponentiell an. Die Korrekturwerte d für eine Regelabweichung der Materialverteilung werden dadurch festgelegt, daß die den n Volumenabschnitten zugeordneten Funktionswerte des Korrekturbandes durch Multiplikation mit einem Profilfaktor gestreckt oder gestaucht werden. Gleichzeitig wird der in Fig. 4 nicht mehr dargestellte Grundspalt so angepaßt, daß die für die Vorformlingsbildung eingesetzte Schmelzemenge konstant bleibt. Mit anderen Worten sind die Flächen unter den Programmkurven 9 und 9.1 in der dargestellten Auftragung gleich groß.

Die Programmkurve 9.2 ergibt sich dadurch, daß die Funktionswerte der Programmkurve 9 oder die Funktionswerte der Profilkurve b (Funktions der Programmkurve abzüglich des Grundspaltes und eines etwaigen Korrekturbandes) mit einem Profilfaktor f multipliziert werden, wobei der Profilfaktor f als Funktion der gemessenen Regelabweichung festgelegt ist. Regelabweichung meint die Differenz zwischen einer die Materialverteilung im Vorformling kennzeichnenden Meßgröße, z. B. das Gewicht des oberen Abfallbutzens GOB, von einem Sollwert (z. B. $GBO_{Soll}$ ). Die Abhängigkeit zwischen dem Profilfaktor und der Regelabweichung ist in Fig. 6 schematisch an einem nicht maßstäblichen Beispiel dargestellt. Gleichzeitig wird auch hier der Grundstalt a bzw. ein anderer Anteil der Programmkurve 9 so angepaßt, daß die für die Vorformlingsbildung eingesetzte Schmelzemenge konstant bleibt. Die von der Programmkurve 9 und der Programmkurve 9.2 beschriebenen Flächen in der dargestellten Auftragung sind ebenfalls gleich groß.

Im Ausführungsbeispiel werden Gewichtsmessungen an einem Hohlkörperabschnitt durchgeführt, um Abweichungen der Materialverteilung von der Vorgabe zu ermitteln. Es versteht sich, daß auch andere, bereits eingehend erläuterte Meßverfahren einzeln oder in Kombination eingesetzt werden können.

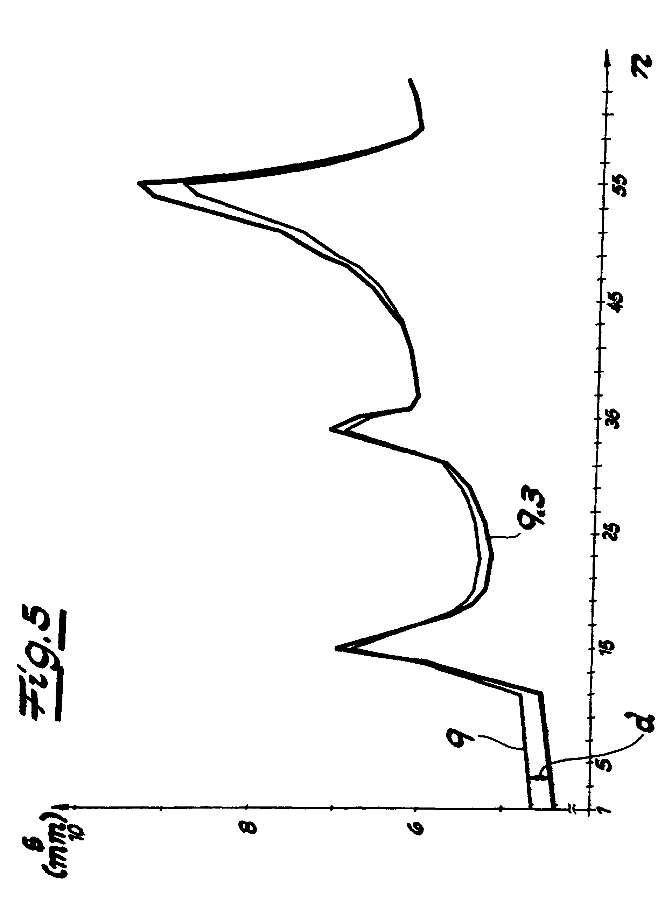

Die Fig. 5 zeigt an einem weiteren Beispiel die Änderung des Düsenspaltes s, wenn der Programmkurve 9 Korrekturwerte d aufgeschaltet werden. Die Programmkurve 9 weist mehrere Maxima auf. Dem Diagramm entnimmt man, daß der mittlere Düsenspalt zum Vorformlingsende (n=63) anwächst, weil die Volumenabschnitte zum Vorformlingsende aufgrund des zunehmenden Vorformlinggewichtes einer stärkeren Ausländung unterliegen als die Volumenabschnitte nahe der Vorformlingsunterkante (n=1). Nach Aufschaltung der Korrekturwerte d resultiert die Programmkurve 9.3. Sie ergibt sich in dem dargestellten Beispiel aus einer Multiplikation der Profilkurve 9 (Programmkurve abzüglich des Grundspaltes) mit einem die Funktionswerte streckenden Profilfaktor in Kombination mit einer Verkleinerung des Grundspaltes a und mit der weiteren Maßgabe, daß die für die Vorformlingsbildung eingesetzte Schmelzemenge konstant bleibt, also die Flächen unter den Programmkurven 9 und 9.3 gleich groß sind.

**Patentansprüche**

**1.** Verfahren zum Blasformen von Hohlkörpern aus thermoplastischem Kunststoff, bei dem

schlauchförmige Vorformlinge (1) aus Kunststoffschmelze hergestellt werden,

die Vorformlinge (1) in einer Blasform (5) zu Hohlkörpern (6) aufgeweitet werden und

die Hohlkörper (6) ausgeformt sowie anhaftende Abfallbutzen (7, 8) entfernt werden,

wobei die Kunststoffschmelze aus einem Düsenspalt (s) eines Strangpreßkopfes (4) austritt, der von einem mit der Vorformlingsbildung ablaufenden Wanddickenprogramm (3) gesteuert wird, welches das Volumen der für einen Vorformling (1) benötigten Kunststoffschmelze in eine vorgegebene Anzahl (n) Volumenabschnitte unterteilt und diesen Volumenabschnitten Düsenspaltstellwerte zuordnet, wobei die Düsenspaltstellwerte eine über die Anzahl (n) Volumenabschnitte aufgetragene Programmkurve (9) bilden, wobei die Vorformlingsextrusion bzw. der Vorformlingsausstoß geregelt wird, und im Rahmen dieser Regelung mindestens ein Anteil des Düsenspaltes als Stellgröße verwendet wird, **dadurch gekennzeichnet, daß** anhand mindestens einer Meßgröße die Materialverteilung im Vorformling (1) oder im Hohlkörper (6) mit einer Vorgabe verglichen wird, daß zum Zwecke des Ausregeins einer durch viskoelastische Effekte bedingten Abweichung von der Vorgabe den Düsenspaltstellwerten der Programmkurve (9) Korrekturwerte (d) aufgeschaltet werden, die das Durchhängen des Vorformlings (1) beeinflussen, und daß mindestens eines der nachfolgenden Verfahrensmerkmale 1.1) bis 1.3) verwirklicht wird:

1.1) Der Grundspalt (a) oder ein anderer Teil der Programmkurve (9) wird bei einer Aufschaltung der Korrekturwerte so angepaßt, daß die für die Vorformlingsbildung eingesetzte Schmelzemenge konstant bleibt;

1.2) Die Programmkurve ergibt sich durch Superposition eines Grundspaltes (a) einer Profilkurve (b) und eines Korrekturbandes (c), dessen Funktionswerte eine nicht lineare Funktion bilden, wobei die Korrekturwerte (d) für eine Regelabweichung der Materialverteilung dadurch festgelegt werden, daß die den Volumenabschnitt (n) zugeordneten Funktionswerte des Korrekturbandes (c) durch Multiplikation mit einem Profilfaktor (f) gestreckt oder gestaucht werden, und wobei das Korrekturband (c) eine Rampe bildet mit einem Profil, das im wesentlichen Spiegelbildlich zu der Profilkurve (5) oder Programmkurve (9) ist;

1.3) die Korrekturwerte (d) werden anhand von eingegebenen Materialdaten und anhand der gemessenen Schmelzetemperatur sowie gegebenenfalls weiterer Meßdaten errechnet und in Abhängigkeit der Meßwerte ständig angepaßt.

**2.** Verfahren nach Anspruch 1, **dadurch gekennzeichnet, daß** das Korrekturband (c) eine Rampe bildet, die an dem der Vorformlingsunterkante (n=1) zugeordneten Volumenabschnitt beginnend durch einen stetigen, überproportional ansteigenden Kurvenzug über die Anzahl (n) Volumenabschnitte beschrieben ist.

**3.** Verfahren nach Anspruch 2, **dadurch gekennzeichnet, daß** die Rampe exponentiell ansteigt.

**4.** Verfahren nach Anspruch 1, **dadurch gekennzeichnet, daß** die Funktionswerte der Programmkurve (9) oder die Funktionswerte einer Profilkurve, die um den Anteil eines Grundspaltes (a) kleiner ist als die Programmkurve (9), mit einem Profilfaktor (f) multipliziert werden, wobei der Profilfaktor (f) als Funktion der Regelabweichung festgelegt ist.

**5.** Verfahren nach einem der Ansprüche 1 bis 4, **dadurch gekennzeichnet, daß** mit der Vorformlingsbildung ein Korrekturprogramm synchron zu dem Wanddickenprogramm abläuft.

**6.** Verfahren nach einem der Ansprüche 1 bis 5, **dadurch gekennzeichnet, daß** Gewichtsmessungen an einem oder mehreren Hohlkörperabschnitten (GOB, GUB, GN) durchgeführt werden und die Abweichung mindestens einer Gewichtsmessung von einem vorgegebenen Sollwert für die Festlegung der Korrekturwerte (d) verwendet wird.

**7.** Verfahren nach einem der Ansprüche 1 bis 5, **dadurch gekennzeichnet, daß** an den aus dem Düsenspalt (s) austretenden Vorformlingen (1) mindestens eine Markierung angebracht wird, deren Position an dem vollständig extrudieren bzw. ausgestoßenen Vorformling oder an dem Hohlkörper mit einer Soll-Position verglichen wird, wobei die Längenabweichung von einem vorgegebenen Sollwert für die Festlegung der Korrekturwerte (d) verwendet wird

**8.** Verfahren nach einem der Ansprüche 1 bis 5, **dadurch gekennzeichnet, daß** an den Hohlkörpern und/oder den Vorformlingen Wanddickenmessungen durchgeführt und nach Maßgabe dieser Messungen die Korrekturwerte (d) festgelegt werden.

**9.** Verfahren nach einem der Ansprüche 1 bis 5, **dadurch gekennzeichnet, daß** durch eine Meßeinrichtung mit mehreren in Extrusionsrichtung untereinander angeordneten Signalgebern und durch einen Extrusionszeitvergleich der damit gemessenen Extrusionszeiten die Korrekturwerte (d) zur Beeinflussung des Durchhängens ermittelt werden.

**10.** Verfahren nach Anspruch 12, **dadurch gekennzeichnet, daß** die Abweichung der Extrusionszeiten von vorgegebenen Sollwerten ermittelt werden, daß die Sollwertabweichungen untereinander verglichen werden und eine Korrektur der Programmkurve (9) vorgenommen wird, wenn die Sollwertabweichungen untereinander differieren.

## Claims

**1.** A method for blow moulding hollow bodies made from thermoplastic synthetic materials, according to which

tubular preforms (1) are produced from molten plastic mass,

preforms (1) are expanded into hollow bodies (6) in a blowing mould (5) and

hollow bodies (6) are ejected from the mould and

any waste portions (7, 8) are also removed, wherein the molten plastic mass exits a nozzle gap (s) of an extrusion head (4) that is controlled by a wall thickness program (3) which runs in parallel with the formation of the preforms, dividing the volume of molten plastic mass required to make a preform (1) into a predetermined number (n) of volume fractions and allocating nozzle gap control values to these volume fractions, wherein the nozzle gap control values form a program curve (9) plotted against the number (n) of volume fractions, wherein the preform extrusion and/or preform ejection is regulated, and as part of this regulation at least one portion of the nozzle gap is used as a control variable, **characterized in that** the material distribution in preform (1) or in hollow body (6) is compared to a reference value with respect to at least one measurement parameter, and **in that** for purposes of fully stabilizing a deviation from the reference due to viscoelastic effects, correction values (d) are assigned to nozzle gap control values of program graph (9), which influence sagging of preform (1), and that at least one of the following features 1.1) to 1.3) of the method is realized:

1.1) the basic gap (a) or another part of program curve (9) is adjusted when the correction values are applied so that the quantity of molten mass introduced for producing preforms remains constant;

1.2) the program curve is obtained by superimposing a basic gap (a) of a profile curve (b), and a correction strip (c), whose function values form a non-linear function, wherein correction values (d) for a deviation control of the material distribution are determined by stretching or compressing the function values of correction strip (c) assigned to volume fraction (n) through multiplication by a profile factor (f), and wherein correction strip (c) forms a ramp having a profile that is essentially a mirror image of profile curve (5) or program curve (9);

1.3) correction values (d) are constantly recalculated on the basis of entered material data and on the basis of the measured pour point and other measurement data as necessary, and adjusted according to the measurement values.

2. The method according to claim 1 **characterized in that** correction strip (c) forms a ramp that is described by a curve beginning on the volume portion assigned to preform lower edge (n=1) and rising constantly and superproportionally over the number (n) of volume fractions.

3. The method according to claim 2, **characterized in that** the ramp rises exponentially.

4. The method according to claim 1, **characterized in that** the function values of program curve (9) or the function values of a profile curve that is smaller than program curve (9) by the fraction of a basic gap (a), are multiplied with a profile factor (f), wherein profile factor (f) is fixed as a function of the deviation control.

5. The method according to any of claims 1 to 4, **characterized in that** a correction program runs synchronously with the wall thickness program during the formation of preforms.

6. The method according to any of claims 1 to 5, **characterized in that** weight measurements are performed on one or more hollow body sections (GOB, GUB, GN), and the deviation from at least one predetermined reference value of at least one weight measurement is used to determine correction values (d).

7. The method according to any of claims 1 to 5, **characterized in that** at least one marking is applied to preforms (1) exiting nozzle gap (s), the position of which on the fully extruded or ejected preform or on the hollow body is compared with a reference position, wherein the longitudinal deviation from a predetermined reference value is used to determine correction values (d).

8. The method according to any of claims 1 to 5, **characterized in that** wall thickness measurements are performed on the hollow bodies and/or on the preforms and correction values (d) are determined on the basis of the dimensions of these measurements.

9. The method according to any of claims 1 to 5, **characterized in that** correction values (d) for influencing sag are determined using a measuring device having a plurality of transducers arranged one below the other in the direction of the extrusion, and by a comparison of the extrusion times measured thereby.

10. The method according to claim 9, **characterized in that** the deviation of extrusion times from predetermined reference times is calculated, that the reference deviation values are compared with one other and a correction is made to program curve (9) if the reference deviations differ from each other.

## Revendications

1. Procédé pour le soufflage de corps creux en matière thermoplastique, dans lequel

   des préformes tubulaires (1) sont fabriquées à partir d'une coulée de matière plastique,

   les préformes (1) sont élargies dans un moule finisseur (5) pour former des corps creux (6),

   les corps creux (6) sont démoulés et les cives adhérentes (7, 8) sont éliminées ;

   la coulée de matière plastique sortant de l'orifice de buse (s) d'une tête de presse en continu (4) qui est commandée par un programme d'épaisseur de paroi (3) se déroulant en même temps que la formation de la préforme, qui subdivise le volume de la coulée de matière plastique nécessaire pour une préforme (1) en un nombre prédéfini (n) de sections de volume et associe à ces sections de volume des valeurs de réglage de l'orifice de buse, les valeurs de réglage de l'orifice de buse formant une courbe de programme (9) se rapportant au nombre (n) de sections de volume, l'extrusion de la préforme ou l'éjection de la préforme étant régulée, et au moins une partie de l'orifice de buse étant utilisée comme grandeur de réglage dans le cadre de cette régulation, **caractérisé en ce que**, sur la base d'au moins une valeur de mesure, la répartition de matière dans la préforme (1) ou dans le corps creux (6) est comparée à un critère prédéfini, qu'aux fins de réajustement d'un écart dû à des effets de viscosité et d'élasticité par rapport au critère prédéfini, des valeurs correctives (d) qui influent sur la hauteur de tirée de la préforme (1) sont mises en oeuvre dans la courbe de programme (9) et qu'au moins une des caractéristiques suivantes 1.1) à 1.3) du procédé est réalisée :

   1.1) L'intervalle de base (a) ou une autre partie de la courbe de programme (9) est adapté, lors de la mise en oeuvre des valeurs correctives, de manière à ce que la quantité de coulée utilisée pour former la préforme reste constante ;

   1.2) La courbe de programme résulte d'une superposition d'un intervalle de base (a) d'une courbe de profil (b) et d'une bande correctrice (c), dont les valeurs fonctionnelles constituent une fonction non linéaire, les valeurs correctives (d) pour un écart par rapport au réglage de la répartition de matière étant fixées par le fait que les valeurs fonctionnelles de la bande correctrice (c) associées aux (n) sections de volume sont augmentées ou réduites par multiplication avec un facteur de profil (f), et la bande correctrice (c) formant une rampe avec un profil qui est globalement symétrique à la courbe de profil (5) ou à la courbe de programme (9) ;

   1.3) Les valeurs correctives (d) sont calculées sur la base de valeurs de matière rentrées et sur la base de la température de coulée mesurée ainsi que, le cas échéant, d'autres valeurs de mesure et sont constamment adaptées en fonction des valeurs de mesure.

2. Procédé selon la revendication 1, **caractérisé en ce que** la bande correctrice (c) forme une rampe qui est décrite, en commençant par la section de volume associée au bord inférieur de la préforme (n=1), par une courbe en évolution constante augmentant de façon plus que proportionnelle au dessus du nombre (n) de sections de volume.

3. Procédé selon la revendication 2, **caractérisé en ce que** la rampe augmente de manière exponentielle.

4. Procédé selon la revendication 1, **caractérisé en ce que** les valeurs fonctionnelles de la courbe de programme (9) ou les valeurs fonctionnelles d'une courbe de profil qui est inférieure de la valeur d'un intervalle de base (a) à la courbe de programme (9) sont multipliées à un facteur de profil (f), le facteur de profil (f) étant fixé en fonction de l'écart par rapport au réglage.

5. Procédé selon une des revendications 1 à 4, **caractérisé en ce que**, pendant la formation de la préforme, un programme de correction se déroule de manière synchrone au programme d'épaisseur de paroi.

6. Procédé selon une des revendications 1 à 5, **caractérisé en ce que** des mesures de poids sont réalisées sur une ou plusieurs sections du corps creux (GOB, GUB, GN) et que l'écart d'au moins une mesure de poids par rapport à une valeur théorique prédéfinie est utilisé pour la fixation des valeurs correctives (d).

7. Procédé selon une des revendications 1 à 5, **caractérisé en ce que**, sur les préformes (1) sortant de l'orifice de buse (s), au moins un marquage, dont la position sur la préforme complètement extrudée ou éjectée ou sur le corps creux est comparée à une position théorique, est apposé, l'écart de longueur par rapport à une valeur théorique prédéfinie étant utilisé pour la fixation des valeurs correctives (d).

8. Procédé selon une des revendications 1 à 5, **caractérisé en ce que**, sur les corps creux et/ou les préformes, des mesures d'épaisseur de paroi sont réalisées et que les valeurs correctives (d) sont fixées en fonction de ces mesures.

9. Procédé selon une des revendications 1 à 5, **carac-**

**térisé en ce que** les valeurs correctives (d) sont calculées pour influer sur la hauteur de tirée grâce à un dispositif de mesure avec plusieurs émetteurs de signaux disposés l'un en dessous de l'autre dans le sens d'extrusion et à une comparaison du temps d'extrusion des temps d'extrusion ainsi mesurés.

10. Procédé selon une revendication 9, **caractérisé en ce que** l'écart des temps d'extrusion par rapport à des valeurs théoriques prédéfinies est calculé, que les écarts par rapport aux valeurs théoriques sont comparés les uns aux autres et qu'une correction de la courbe de programme est réalisée (9) lorsque les écarts par rapport aux valeurs théoriques diffèrent les uns des autres.

EP 0 776 752 B1

_Fig.1_

$12$   $c = c(GOB)$

$GOB$

$3$   $9$   $b$

$a$

$c$

$n_S = n_S(GUB, GN)$

$a = a(GUB, GN)$

$10$

$n_g$

$2$

$4$

$5$

$5$

$GOB$

$7$   $6$

$GN$

$8$   $GUB$

$6$

$11$

$1$

$GUB$
$GN$

# Fig.2

Fig.3

*Fig.4*

*Fig.5*

*Fig.6*

Profilfaktor f

1

GOB$_{soll}$

Gewicht GOB des oberen Abfall-butzens